# EUROPEAN PATENT APPLICATION

(11) **EP 4 668 035 A1**
(43) Date of publication of application: **24.12.2025**
(21) Application number: 24382677.3
(22) Date of filing: 21.06.2024
(51) Int. Cl.: G05B 19/042, B02C 17/18, F27B 7/42

(54) **SYSTEM FOR MONITORING A SOLIDS TREATMENT MACHINE**

(71) Applicant: Comspain Engineering & Development, S.L., 28045 Madrid (ES)
(72) Inventor: Vergara Magrazo, Angel Joaquin, Madrid (ES)
(74) Representative: Pons IP

(57) **Abstract**

The present invention relates to a system method system based in a IoT (Internet of Things) platform for monitoring solids treatment machinery in fertilizer, mineral, or chemical sectors, which allows obtain information about the machines state and performance remotely and automatically, and in real time. This invention combines a set of sensors that measures different parameters sux as position, vibration or temperature of different machinery component; with a network that receives that information and stores it into a cloud database which and an app to check said information.

## Description

### OBJECT OF THE INVENTION

The object of the invention relates to system based in a IoT (Internet of Things) platform for monitoring solids treatment machinery in fertilizer, mineral, or chemical sectors, which allows obtain information about the machines state and performance remotely and automatically, and in real time.

### BACKGROUND OF THE INVENTION

During the current agrarian age, as available land decreases because of expanding development, increasing crop output is now the main focus of the agriculture sector. Farmers enhance the fertility of soil by adding fertilizer in order to boost agricultural production. Researchers have tried to create automated organic fertilizer mixers to decrease labor needs, reduce production time, and lower costs of organic fertilizers.

The main target in fertilizer production is the rotating drum, which is then the main target for future upgrades and enhancements to improve the fertilizer production process.

Monitoring of these rotating drum and their main components is highly important because failures here could affect the whole production, decreasing the quality and quantity of the product or even forcing production to stop, which affects negatively to the revenues.

In "Autonomous fertilizer mixer through the Internet of Things (IoT). Materials Today: Proceedings", it is proposed a system and method to set an autonomous fertilizer mixer which allows to monitor the status of the fertilizer production remotely by a weight sensor, also providing updates and alerts to workers.

In order to resolve the aforementioned matters, it is necessary to develop new strategies that allow the automated and remotely monitoring of the different components of fertilizer production machinery.

However, this type of systems only focuses on the weight, and no parameters of the machinery functioning are analyzed. This way, no malfunctioning of the machinery can be foreseen or expected until it already happens and affects the production in consequence.

In order to resolve the aforementioned matters, it is necessary to develop new strategies that allow the automated and remotely monitoring of the different components of fertilizer production machinery.

### DESCRIPTION OF THE INVENTION

The object of the present invention relates to a system for monitoring a solids treatment machine.

The solids treatment machinery comprises a drum and a movement transmission module and comprising:
- a motor configured to move the drum;
- a high-speed shaft connected to the motor for transmitting the movement generated;
- a gearbox connected to the high-speed shaft by a coupling, which preferably is hydraulic, for reducing the speed of the movement transmitted;
- a low-speed shaft connected to the gearbox for transmitting the movement;
- a pinion transmits the movement (provided by the motor) to the girth gear, which allow the turning of the drum with the movement received by the motor through the different steps describes above, the drum is turned over four trunnion rollers which rotate due to the riding rings rotation

wherein the pinion of the movement transmission module is supported by two pinion bearings each riding ring arrangement comprise:
   - a riding ring connected to the drum;
   - a frame, which support all the exerted pressure by the drum and all its components;
   - at least four trunnion rollers attached to the frame and configured to contact the riding ring for supporting it; and
   - a thrust roller configured to control the contact between the riding ring and the trunnion rollers and between the pinion and girth gear; and
wherein each trunnion roller is supported by two trunnion roller bearings,

The system for monitoring comprises:
- one or more vibration and temperature sensors configured to measure: axial vibration (mm/s), horizontal radial vibration (mm/s), vertical radial vibration (mm/s) and temperature and placed on the pinion bearings, on the high-speed shaft, on the low-speed shaft and/or on the trunnion rollers.
- one or more temperature sensors configured to measure temperature and placed on the high-speed coupling (installed for the connection shafts between the gearbox and the motor), on the low-speed coupling (installed for the connection shafts between the gearbox and the pinion) on the contact between the girth gear and the pinion and/or on the contact between the riding rings and the trunnion rollers;
- one or more rotation sensors, configured to measure angular velocity and placed on the thrust rollers; and
- two or more counter turns sensor, configured to measure the turns of the shell, and each riding ring.
- a processing module connected to the vibration and temperature sensors, rotation sensors and temperature sensors and configured to control and to receive data from said sensors.

The system of the invention could comprise the solids treatment machine as defined, the sensors and the processing module or could comprise only the sensors and the processing module.

Additionally, the system could comprise one or more proximity sensors configured to monitor movement between the riding ring and the trunnion rollers.

Preferably, the proximity sensors measure the signals: a) proximity signal of the riding ring (6) towards the load side; b) proximity signal of the riding ring (6) towards the load discharge side.

The temperature sensors placed on the contact between the girth gear and the pinion could comprise one or more infrared sensors. Preferably, the number of infrared sensors ranges between 2 and 3 sensors.

The temperature sensors placed on the contact between the riding rings and the trunnion rollers could comprise thermographic cameras configured to register heat photographs periodically.

The system could further comprise a strip configured to support the rotation sensors.

In some embodiment, the rotation sensors could be activated when the riding rings contact the thrust rollers.

Preferably, the processing module could comprise a wired connection to the sensors.

And more preferably, the processing module could comprise an IO-Link master and a CED DIS Kit.

The invention also relates to a method for monitoring a solids treatment machine, which comprises the steps of:
- receiving signals from the sensors of the system defined,
- processing the signals received by the processing module determining if there is a failure if the signals are out of predetermined ranges; and
- storage the signals received and the result of the processing in a cloud database.

The method of the invention could also comprise a step of displaying the signals received and the result of the processing.

Moreover, the method could further comprise a step of generating alerts or notifications when there is a failure.

### DESCRIPTION OF THE DRAWINGS

To complement the description that is being made and for the purpose of helping to better understand the features of the invention according to a preferred practical exemplary embodiment thereof, a set of drawings is attached as an integral part of said description in which the following is depicted in an illustrative and non-limiting manner:
Figure 1 shows a diagram of the solids treatment machinery and the system for monitoring of the invention.
Figure 2 shows the location of the temperature and vibration sensor of the pinion bearing.
Figure 3 shows the location of the temperature and vibration sensor of the high-speed (main motor side) and low speed (pinion side) shaft bearing.
Figure 4 shows the riding ring migration sensor and their location.
Figure 5 shows the rotation sensor that measures drum flotation and its location.
Figure 6 shows the set of infrared sensors that measure the pinion temperature to detect failures.
Figure 7 shows the location of the temperature and vibration in X, Y and Z sensor of the trunnion rollers.
Figure 8 shows the thermographic cameras that analyze the temperature to check the contact between the riding rings and trunnion rollers.
Figure 9 shows the proximity sensors that control the riding ring and shell movement.
Figure 10 shows a diagram of the invention and its main components.

### PREFERRED EMBODIMENT OF THE INVENTION

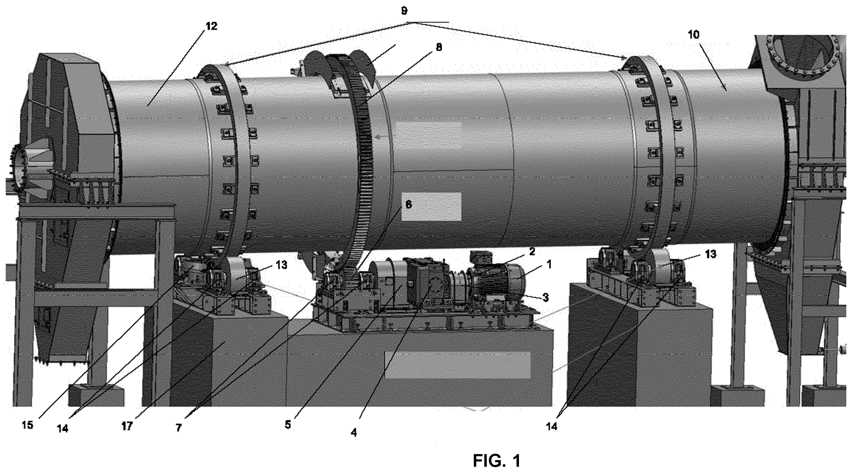

A preferred embodiment of the system and method for monitoring solids treatment machinery is described below with the help of Figures 1 to 10.

Figure 1 shows a diagram of the complete solids treatment machinery.

The solids treatment machinery comprising a drum (12) and a movement transmission module comprising a motor (1) configured to move the drum (12). The movement transmission module comprises:
- a high-speed shaft (2) connected to the motor (1) for transmitting the movement generated by said motor (1);
- a gearbox (4) connected to the high-speed shaft (2) by a coupling (3), which preferably is hydraulic, for reducing the speed of the movement transmitted;

- a low-speed shaft (5) connected to the gearbox (4) for transmitting the movement;
- a pinion (6) and a girth gear (8) configured to transmit the movement generated by the motor (1) to the drum (12);
- one or more riding ring arrangements connected to the shell (10);
- a shell (10) connected to the drum (12).

Each riding ring arrangement comprise:
- a riding ring (9) connected to the shell (10);
- a frame (17);
- two trunnion rollers (13) attached to the frame (17) and configured to contact the riding ring (9) for supporting it;
- a thrust roller (15) configured to monitor the movement between the riding ring (9) and the trunnion rollers (13) and the girth gear (8) over the pinion (6).

Also, the pinion (6) of the movement transmission module is supported by two pinion bearings (7). A first pinion bearing (7) is connected to the low-speed shaft (5) and a second pinion bearing (7) is placed in a side opposite to the first pinion bearing (7) with respect to the pinion (6).

Similarly, each trunnion roller (13) is supported by two trunnion roller bearings (14) connected by a trunnion roller shaft.

The solids treatment machinery also comprises a protection structure (16) covering the girth gear and the pinion.

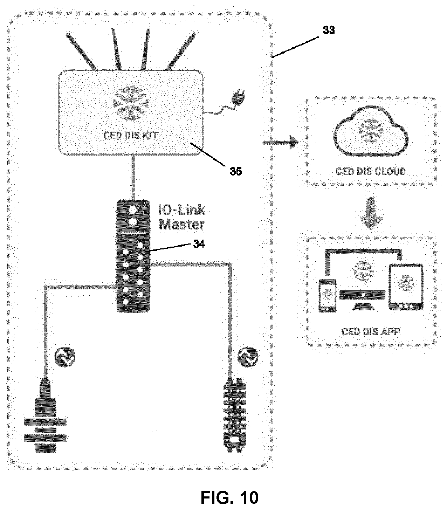

The system for monitoring the solids treatment machinery of the invention comprises a set of different sensors, connected to a link master unit as depicted in Figure 10.

More particularly, the sensors are:
- vibration and temperature sensors (20, 21, 22, 23, 24, 25) configured to measure vibration in X, Y and Z axis and placed on the pinion bearings (20, 21), on the high-speed shaft (23), on the low-speed shaft (22) and/or on the trunnion rollers (24, 25);
- temperature sensors (26, 27, 28) configured to measure temperature and placed on the coupling (26) between the high-speed shaft (2) and the gearbox (4), on the contact (27) between the girth gear (8) and the pinion (6) and/or on the contact (28) between the riding rings (9) and the trunnion rollers (13);
- rotation sensors (29, 30) configured to measure angular velocity and placed on the riding rings (29) and/or the thrust rollers (30); and/or
- proximity sensors (31, 32) configured to measure distance and placed on the riding rings (31) and/or the shell (32).

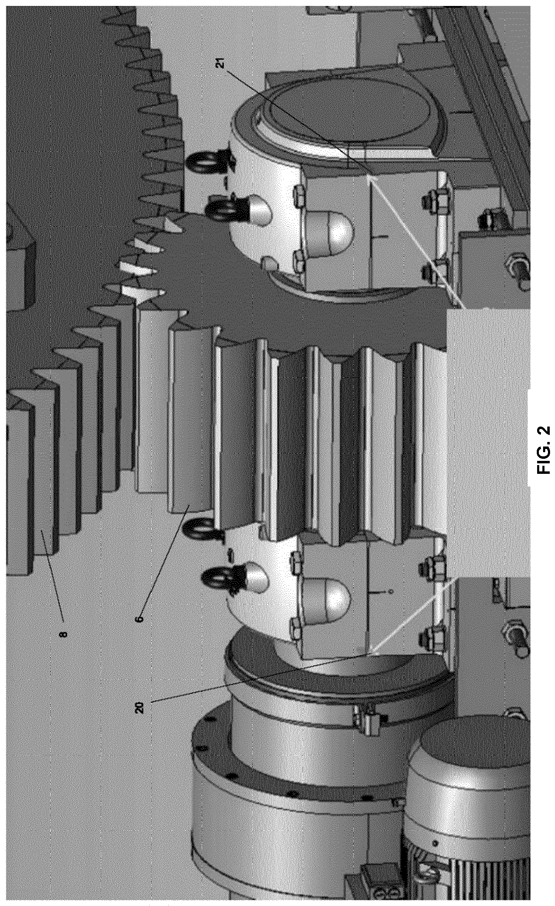

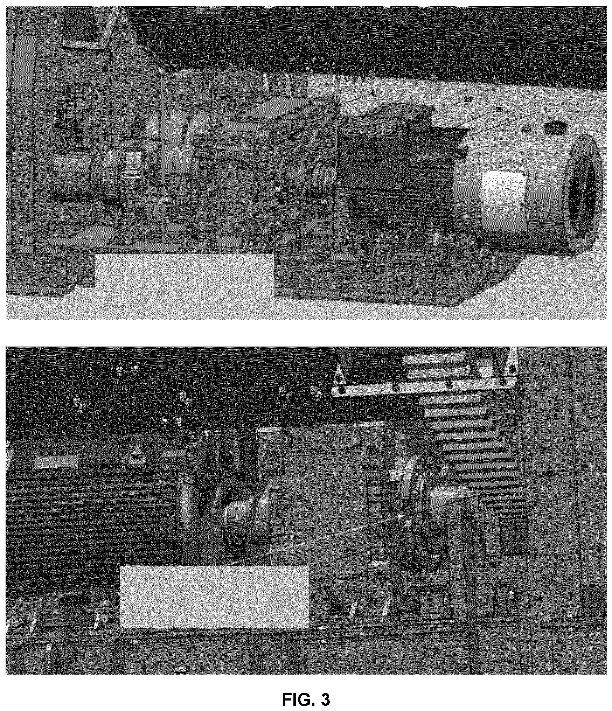

According to that, one vibration and temperature sensor (20, 21) is installed on each pinion bearing (7) as depicted in figure 2 which is attached using a strong magnet, emitting each vibration and temperature sensor (20, 21) signals regarding measurements of temperature, axial vibration (mm/s), horizontal radial vibration (mm/s) and vertical radial vibration (mm/s). This same type of vibration and temperature sensor (22, 23) is also installed on the on the high-speed (2) (motor side) and low-speed (pinion side) shaft (5) as depicted in the Figure 3 and attached by the use of strong magnets, emitting the same four signals.

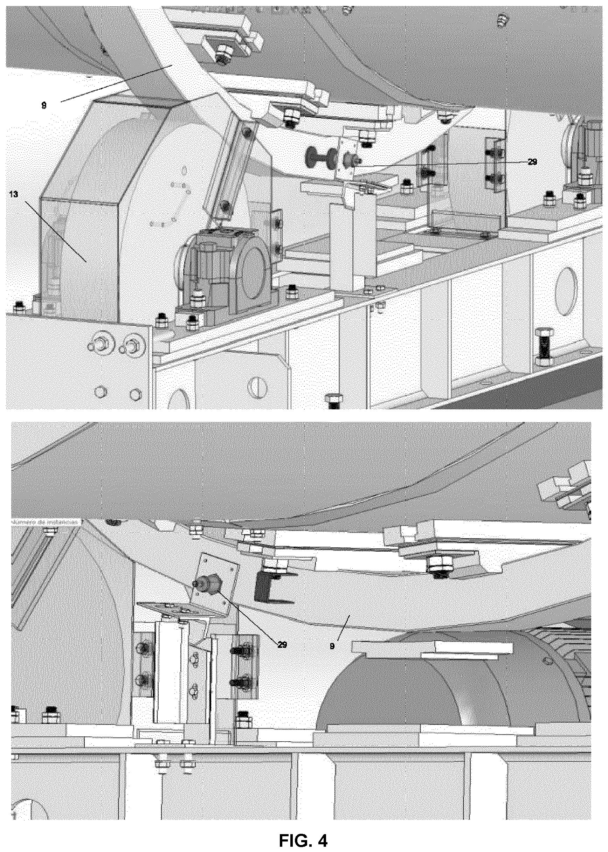

The system also provides methods for controlling the riding ring (9) migration to analyze the needed parameters before the planed stop and estimate if it is required to make some adjustments. Considering this, the system implements rotation sensors (29) such as described in Figure 4 that measures the angular velocity of each element with a defined period, calculating the difference between the angular speeds of the riding rings (9) and the shell (10), which is then converted to linear speed. From this velocity value, the migration of the riding rings (9) with respect to the shell (10) is calculated. Finally, divide this migration value by *π* to get the average value of an air gap. These calculations are performed to calculate the optimal airgap and migration value of each drum (12).

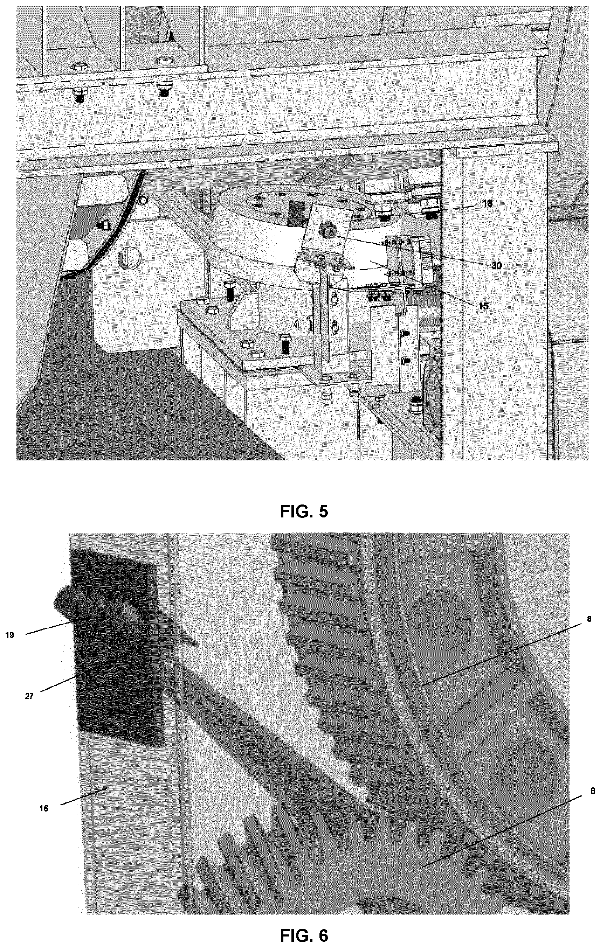

A preferred embodiment of the system includes a rotation sensor (30) to control drum flotation, which is installed in front of each thrust roller (15) and a strip (18) is provided to support the rotation sensor (30), as shown in Figure 5. This rotation sensor (30) is activated when the thrust roller (15) is spinning and the riding ring (9) establishes contact with it, resulting in its activation and measurement of the revolutions per minute of this thrust roller (15).

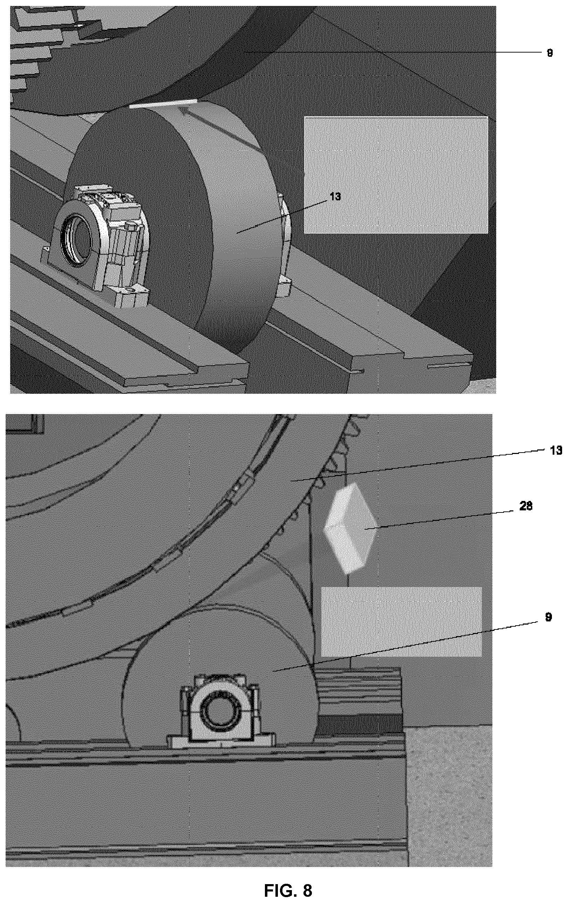

Moreover, the system implements a plurality of temperature sensors (26, 27, 28). Preferably, infrared sensors (27) are used to monitor the temperature of the contact between the girth gear (8) and the pinion (6), helping to detect possible failures such as misalignment, lack of lubrication, etc. These temperature sensors (27) are arranged such they point to the contact between the girth gear (8) and the pinion (6), as depicted in Figure 6. The protection structure (16) could be used to attach the temperature sensors (27). Moreover, they could be fixed inside a tube (19) which protects them from splashes of lubricant or other product. The number of infrared sensors (27) depends on the width of the pinion (6), but ranges between 2 and 3 sensors. In a similar way, the system and method of the invention can also monitor the contact area between the trunnion roller (13) and the riding ring (9). In this case, the temperature sensor (28) could be a thermographic camera (28) which register heat photographs periodically and are used as an input for an analysis software. These cameras (28) need to be arranged in a way they are aimed towards the contact area between the trunnion roller (13) and the riding ring (9), as depicted in Figure 8.

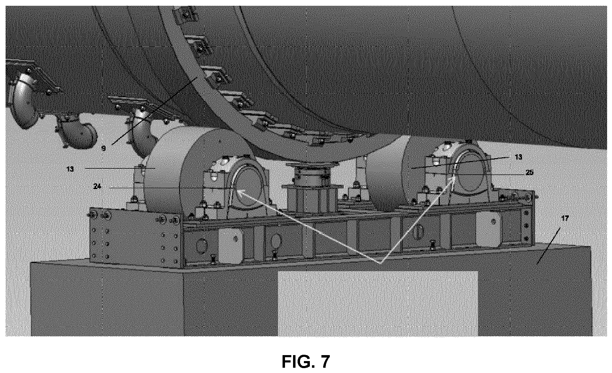

The system further comprises a set of vibration and temperature sensors (24, 25) installed in the eight trunnion roller bearings (14), as depicted in Figure 7. These vibration and temperature sensors (24, 25) measure vibration in the X, Y and Z axes and the temperature.

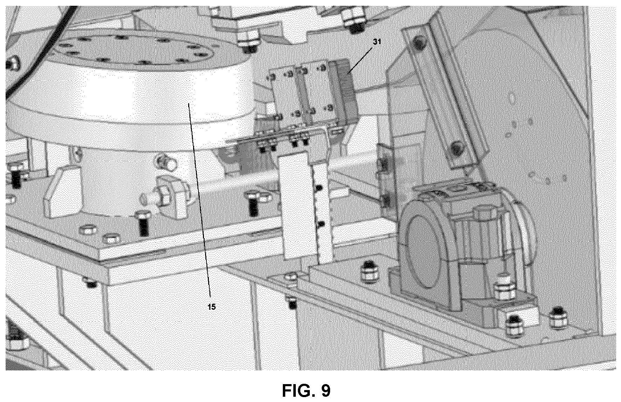

In addition, the system includes a set of proximity sensors (31, 32), described in Figure 9, to monitor the shell (10) and riding rings (9) movement considering the following four signals: a) proximity signal of the shell (10) towards the load side; b) proximity signal of the shell (10) towards the load discharge side; c) proximity signal of the riding ring (9) towards the load side; d) proximity signal of the riding ring (9) towards the load discharge side. Thanks to these vibration and temperature sensors (31, 32), the slip of the shell (10) regarding the riding rings (9) caused by the too high axial push can be monitored, avoiding accidents or malfunctions.

The system and method of the invention also comprises a communication network (33), which comprises an IO-Link master (34) and a CED DIS Kit (35), as shown in figure 10, to which any of the beforementioned sensor sends their information and signals measured. This communication network (33) stores information in a cloud database which is configured to a computer-based application, accessible by computer or smartphone, which displays the sensor information and offers data analysis tools which enables the monitoring of the machines and detection of critical stages.

## Claims

1. System for monitoring a solids treatment machine, the solids treatment machinery comprising a drum (12) and a movement transmission module and comprising:
- a motor (1) configured to move the drum (12);
- a high-speed shaft (2) connected to the motor (1) for transmitting the movement generated;
- a gearbox (4) connected to the high-speed shaft (2) by a coupling (3), for reducing the speed of the movement transmitted;
- a low-speed shaft (5) connected to the gearbox (4) for transmitting the movement;
- a pinion (6) and a girth gear (8) configured to transmit the movement generated by the motor (1) to the drum (12);
- one or more riding ring arrangements connected to the drum (12) and configured to align the drum (12); and
- a shell (10) connected to the drum (12);
wherein the pinion (6) of the movement transmission module is supported by two pinion bearings (7) and each riding ring arrangement comprise:
- a riding ring (9) connected to the drum (12);
- a frame (17);
- at least two trunnion rollers (13) attached to the frame (17) and configured to contact the riding ring (9) for supporting it; and
- a thrust roller (15) configured to control the contact between the riding ring (9) and the trunnion rollers (13); and
wherein each trunnion roller (13) is supported by two trunnion roller bearings (14), and wherein the system for monitoring comprises:
- one or more vibration and temperature sensors (20, 21, 22, 23, 24, 25) configured to measure: axial vibration (mm/s), horizontal radial vibration (mm/s), vertical radial vibration (mm/s) and temperature and placed on the pinion bearings (20, 21), on the high-speed shaft (23), on the low-speed shaft (22) and/or on the trunnion rollers (24, 25);
- one or more temperature sensors (26, 27, 28) configured to measure temperature and placed on the coupling (26) between the high-speed shaft (2) and the gearbox (4), on the contact (27) between the girth gear (8) and the pinion (6) and/or on the contact (28) between the riding rings (9) and the trunnion rollers (13);
- one or more rotation sensors (29, 30), configured to measure angular velocity and placed on the riding rings (29) and/or the thrust rollers (30); and
- a processing module connected to the vibration and temperature sensors, rotation sensors and temperature sensors and/or configured to control and to receive data from said sensors.

2. The system according to claim 1, further comprising one or more proximity sensors (31, 32) configured to monitor movement between the riding ring (9) and the trunnion rollers (13) and the movement of the shell (10).

3. The system according to claim 2, wherein the proximity sensors (31, 32) measures the signals: a) proximity signal of the shell (10) towards the load side; b) proximity signal of the shell (10) towards the load discharge side; c) proximity signal of the riding ring (9) towards the load side; d) proximity signal of the riding ring (9) towards the load discharge side.

4. The system according to any of previous claims, wherein the temperature sensors (27) placed on the contact between the girth gear (8) and the pinion (6) comprise one or more infrared sensors (27).

5. The system according to claim 4, wherein the number of infrared sensors (27) ranges between 2 and 3 sensors.

6. The system according to any of claims 1 to 5, wherein the temperature sensors (28) placed on the contact between the riding rings (9) and the trunnion rollers (13) comprise thermographic cameras (28) configured to register heat photographs periodically.

7. The system according to any of claims 1 to 6, further comprising a strip (18) configured to support the rotation sensors (29, 30).

8. The system according to any of claims 1 to 7, wherein the rotation sensors (29, 30) are activated when the riding rings (9) contact the thrust rollers (13).

9. The system according to any of claims 1 to 8, wherein the processing module comprises a wired connection to the sensors.

10. The system according to any of claims 1 to 9, wherein the processing module comprises an IO-Link master (34) and a CED DIS Kit (35).

11. A method for monitoring a solids treatment machine, which comprises the steps of:
- receiving signals from the sensors of the system according to any of claims 1 to 10,
- processing the signals received by the processing module determining if there is a failure if the signals are out of predetermined ranges; and
- storage the signals received and the result of the processing in a cloud database.

12. The method according to claim 12, further comprising a step of displaying the signals received and the result of the processing.

13. The method according to any of claims 11 to 12, further comprising a step of generating alerts or notifications when there is a failure.
